Europäisches Patentamt

European Patent Office

Office européen des brevets

(11) Publication number: **0 357 827**
**A1**

# EUROPEAN PATENT APPLICATION

(21) Application number: 88114725.0

(22) Date of filing: 09.09.88

(51) Int. Cl.⁵ **G06K 7/00 , G06K 7/06**

(43) Date of publication of application:
14.03.90 Bulletin 90/11

(84) Designated Contracting States:
**AT BE CH DE ES FR GB GR IT LI LU NL SE**

(71) Applicant: **SIXCOM S.P.A.**
**Via G. Govone, 66**
**I-20155 Milano(IT)**

(72) Inventor: **Baratti, Cesare**
**Via Cilea 106**
**Milano(IT)**
Inventor: **Parziale, Anacleto**
**Via Matteotti 40/2**
**Arese MI(IT)**

(54) **Multi-reader for magnetic band cards, optical bar-code cards, electronic microprocessors cards having a light source and a high resolving detector for the card reflected beams.**

(57) A multi-reader for cards (10) is described consisting of:

a) a slot (27) for the introduction of the cards in the reader, said slot being connected to a supporting plane (28) having a groove to make easier the introduction and the release of the card;

b) a supporting plane having one oscillating end section (25), said section being operated by hand through the same card;

c) a set of specific elements for reading the magnetic band (14), the bar codes (5), the electronic microprocessors having up to 16-contacts connections (3) and a light source (7) with a high resolving detector for identifying the beam reflected by the card;

d) an optical IR sensor (8) for activating the reading elements of the electronic microprocessors of the cards; and

e) a multi-connections card for all the contacts of all the reading elements for the connection of the reader to the terminal which is activated by the card introduction.

FIG.1

## Multi-reader for magnetic band cards, optical bar-code cards, electronic microprocessors cards having a light source and a high resolving detector for the card reflected beams.

The present invention relates to a multi-reader for magnetic band cards, optical bar-code cards, electronic microprocessors cards having a light source and a high resolving detector for the card reflected beams.

The use of magnetic band cards or optical bar-code cards or electronic microprocessors cards or other system-code cards is more and more developping to consent the acces to services which are remote-controlled through an electronic computer:
particularly financial or banking services or personnel identification for the access to working areas.

The cards are for exclusive personal use and are encoded with code systems which activate the input terminals and allow the card identification and the successive access to the services to which the card is enabling.

The use of service, for evident security reasons, is then subjected to the transmission of further codes to the control system through the activated terminal. The commonly used cards have the same dimensions, corresponding to those ones of an address card, and are made of similar plastic resilient material, but they are substantially different in respect of the supported active element which activates the terminal and allows the communication with the central computer.

This "active" section of the card has been built in many different ways: from the most common magnetic bar or optical bar-code cards to the highly sophisticated cards which are supporting a microprocessor storing thousands of informations and of consequence enabling the activated terminal to a very complex interaction with the central computer. Each organization offering a remote controlled service selects the type of card judged the most suitable for the own purposes and the places where the readers for the said cards are to be installed with the relevant terminals for the connection of the user with the central computer.

In the absecnce of agreements between the organizations offering the same service (as e.g. the interbanking system offered under the trade name Bancomat) each organization is using a different type of card and of reader.

Of consequence the need is more and more - evident for a standardization of the different systems so that the user is not obliged to bring together several cards and to seek around for a reader/terminal suitable for the cards at his disposition.

The possibility of access to different services by using only one type of terminal is similarly very important for many stores or shop which are accepting payments through credit- or bank-cards, thus avoiding the installation near to the cashes of several readers suitable for the different types of circulating cards.

The standardization of the access cards to the services of different organizations is however encountering strong resistances because thousands of terminals are already in operation and each organization is desiring to retain its own card both for security reasons and for paying off the investments already made.

The reader according to the present invention has very satisfactorily solved the problem because it is enabling to read the most common cards presently in circulation and it is thus operating as a multiple reader but being a single apparatus.

This feature is thus allowing each organization to retain its own card and control system (i.e. the security of the own system) and at the same time to share the costs for the installations of the readers/terminals with other organizations.

It is also allowing shops, stores or other organizations to install a single reader for offering to the users an access point to the usable services. It is finally allowing the users to avoid to seek around for a suitable reader for their cards by enabling the use of any type of card at their disposition.

The present invention is founded on the observation that the active sections of the cards in circulation are located in particular and fixed positions of the plastic support forming the card.

According to one fundamental characteristic, the multiple reader of the present invention is consisting of:

a) a slot for the introduction of the cards in the reader, said slot being connected to a supporting plane having a groove to make easier the introduction and the release of the card;

b) a supporting plane having one oscillating end section, said section being operated by hand through the same card;

c) a set of specific elements for reading the magnetic band, the bar codes, the electronic microprocessors having up to 16-contacts connections and a light source with a high resolving detector for identifying the beam reflected by the card;

d) an optical IR sensor for activating the reading elements of the electronic microprocessors of the cards; and

e) a multi-connections card for all the contacts of all the reading elements for the connection of the reader to the terminal which is activated by the card's introduction.

The invention's reader will be now described by referring to the attached drawing wherein:

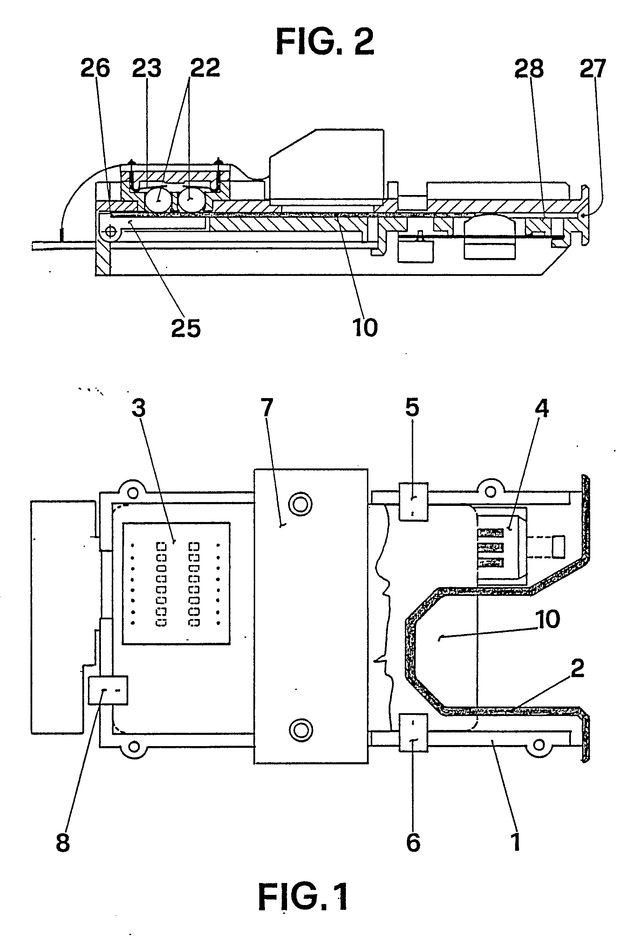

- figure 1 is representing a section of the reader evidentiating the specific reading elements;

- figure 2 is representing the oscillating section of the supporting plane in the reading position.

The reader is containing a reading element 3 having 16 electrical contacts, a reading element 4 for magnetic tracks, a light source 7 having a high resolving detector for the reflected beams, two optical reading elements 5 and 6 for optical bar codes and an optical IR sensor 8 for activating the reading elements of the electronic microprocessors of the card.

The positioning of the reading elements is made so to match the corresponding elements of the normally used cards 10.

It is evident that the 16-contacts reading element 3 can be easily used for the microprocessor-cards having eight or four contacts, the relevant contacts only being activated in the last case.

The card 10 is inserted in the slot 27 of the reader and is beared by the plane 28.

By completely introducing the card in the slot, the card is stroking the oscillating section head 26 and is causing its raising and of consequence the IR sensor 8 activates the reading element of the microprocessor placed into the card.

The oscillating section 25 is bending downward so that the card is pressing the wheels 22 by ensuring that the microprocessor contacts connect with the wheels and the thin sheets 23, i.e. with the network connections of the reading element 3. The wheels and the thin sheets are golden coated to improve the contact.

The network of the microprocessor reading element is exclusively activated when the oscillating section 25 is causing the card to operate the IR sensor 8 and is forcing the contacts with the wheels 22 and with the thin sheets 23, i.e. when the card is completely inserted in the reader so to oblige the oscillating carriage to be inclined downward. Of consequence, all the reading errors are avoided deriving from the "reading" of the card by the contacts as soon as the card is reaching the reading element without being yet perfectly positioned.

A further advantage of the reader according to the invention is residing in the fact that the contact system with the microprocessors reading elements is consisting of 16 small wheels which rotate over the card during its introduction in the reader thus avoiding an abrasive action on the card's active elements and lenghtening its life.

Finally, the forcing of the card's active elements against the relevant reading elements of the reader caused by the inclination of the oscillating section when the card is completely introduced in assures a perfect operation of the card and the terminal activation also if the card is not completely flat or the contacts are not wholly clean.

The reading system based on a light source and a high resolving power detector of the reflected beam is employed for some types of cards and is allowing the identification of the material of construction of the card. The system is usually using a light having a predetermined wave lenght, typically in the ultraviolet range.

A particularly interesting characteristic of the reading according to the invention is consisting in the fact that all the contacts of all the reading elements are placed into a single multi-connection card which ensures a simple, ease and safe connection of the reader to the terminal which is activated by the card's introduction.

## Claims

1. Multi-reader for magnetic band cards, optical bar-code cards, electronic microprocessors cards having a light source and a high resolving detector for the card reflected beams.

2. Multi-reader as claimed in claim 1. consisting of:

a) a slot (27) for the introduction of the cards in the reader, said slot being connected to a supporting plane (28) having a groove to make easier the introduction and the release of the card;

b) a supporting plane (28) having one oscillating end section (25), said section being operated by hand through the same card;

c) a set of specific elements for reading the magnetic band (4), the bar codes (5) and (6), the electronic microprocessors having up to 16-contacts connections (3) and a light source (7) with a high resolving detector for identifying the beam reflected by the card;

d) an optical IR sensor (8) for activating the reading elements of the electronic microprocessors of the cards; and

e) a multi-connections card for all the contacts of all the reading elements for the connection of the reader to the terminal which is activated by the card's introduction.

3. Multi-reader as claimed in claim 2. characterised by the fact that the 16-contacts reading element (3) for microprocessors cards is also allowing the reading of cards having microprocessors with eight or four contacts.

4. Multi-reader as claimed in claim 3 characterised by the fact that an IR sensor (8) activates the reading element of the microprocessor placed into the card.

5. Multi-reader as claimed in claim 3 characterised by the fact that the oscillating end section (25) of the support plane (28) is forcing the card to press the contacts system of the microprocessor placed into the card with the wheels (22) and the thin sheets (23) of the network connections of the reading element (3).

6. Multi-reader as claimed in claim 2 characterised by the fact that the light source (7) is emitting light in the ultraviolet range.

7. Multi-reader as claimed in claim 2 characterised by the fact that the two reading elements (5 and 6) for the optical bar codes are placed one in front of the other on the opposite sides of the supporing plane (28) of the card.

8. Multi-reader as claimed in claim 2 characterised by the fact that all the contacts of all the reading elements are placed into a single multi-connections card for the connection of the reader to the terminal which is activated by the card's introduction.

# FIG. 2

26  23  22                    28    27

25            10

3        7        5        4

10

2

8            6    1

# FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 226 309 (BURROUGHS CORP.) * Figures 1-4; column 3, line 12 - column 4, line 55 * | 1,2,8 | G 06 K 7/00 <br> G 06 K 7/06 |
| Y | EP-A-0 232 115 (TOKYO TATSUNO CO.) * Figures 1-3; column 2, line 54 - column 5, line 4; column 6, lines 4-11 * | 1,2,8 | |
| A | --- | 3,4 | |
| A | PATENT ABSTRACTS OF JAPAN, vol. 8, no. 137 (P-282)[1574], 26th June 1984; & JP-A-59 36 387 (CANON K.K.) 28-02-1984 | 5 | |
| A | DE-A-3 505 130 (SIEMENS) * Figures 1-3; page 5, line 20 - page 7, line 23 * | 1,2,8 | |

TECHNICAL FIELDS
SEARCHED (Int. Cl.4)

G 06 K

The present search report has been drawn up for all claims

| Place of search | Date of completion of the search | Examiner |
|---|---|---|
| THE HAGUE | 27-04-1989 | GYSEN L.A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)